# EUROPEAN PATENT APPLICATION

(11) **EP 4 815 598 A1**
(43) Date of publication of application: **30.09.2026**
(21) Application number: 24893525.6
(22) Date of filing: 21.11.2024
(51) Int. Cl.: H04W 72/20

(54) **INFORMATION DETERMINATION METHOD AND APPARATUS, AND TERMINAL AND NETWORK DEVICE**

(30) Priority: 24.11.2023 CN 202311579753; 26.07.2024 CN 202411015439
(71) Applicant: Datang Mobile Communications Equipment Co., Ltd., Beijing 100085 (CN)
(72) Inventor: ZHAO, Yue, Beijing 100085 (CN); SI, Qianqian, Beijing 100085 (CN); GAO, Xuejuan, Beijing 100085 (CN); XING, Yanping, Beijing 100085 (CN)
(74) Representative: Maiwald GmbH
(86) International application number: PCT/CN2024/133497
(87) International publication number: WO 2025/108370

(57) **Abstract**

The present disclosure provides various information determination methods, information determination apparatuses, terminals, and network devices. The method performed by a terminal includes: determining a first SBFD symbol is valid or not.

## Description

### CROSS-REFERENCE TO RELATED APPLICATION

This application claims a priority of the Chinese patent application No. 202311579753.8 titled "Information Determination Methods, Information Determination Apparatuses, Terminals and Network Devices" and filed on November 24, 2023, and a priority of the Chinese patent application No. 202411015439.1 titled "Information Determination Methods, Information Determination Apparatuses, Terminals and Network Devices" and filed on July 26, 2024, which are incorporated herein by reference in their entireties.

### TECHNICAL FIELD

The present disclosure relates to the field of communication technologies, and in particular, to information determination methods, information determination apparatuses, terminals, and network devices.

### BACKGROUND

In order to solve the coverage, latency, and capacity issues of uplink transmission in Time Division Duplex (TDD) mode, New Radio (NR) will study non-overlapping Sub-Band Full Duplex (SBFD) as a research direction. This involves dividing frequency domain resources into multiple sub-bands that do not overlap with each other, such that uplink and downlink frequency domain resources are located in different sub-bands, hereinafter referred to as "sub-band full duplex." Symbols containing uplink/downlink sub-bands are hereinafter referred to as "SBFD symbols." For TDD-configured uplink symbols that are not configured with a downlink sub-band, they are hereinafter referred to as "full-uplink symbols."

### SUMMARY

An object of the present disclosure is to provide information determination methods, information determination apparatuses, terminals, and network devices, so as to implement the determination of the state of configured SBFD symbol(s).

To solve the above technical problem, an embodiment of the present disclosure provides an information determination method, performed by a terminal, comprising:
determining a first SBFD symbol is valid or not.

Another embodiment of the present disclosure further provides an information determination method, performed by a network device, comprising:
determining a first SBFD symbol is valid or not.

Yet another embodiment of the present disclosure further provides a terminal, comprising a memory, a transceiver, and a processor. The memory is configured to store a computer program; the transceiver is configured to transmit and receive data under the control of the processor; the processor is configured to read the computer program in the memory and perform the following operation:
determining a first SBFD symbol is valid or not.

Still yet another embodiment of the present disclosure further provides a network device, comprising a memory, a transceiver, and a processor. The memory is configured to store a computer program; the transceiver is configured to transmit and receive data under the control of the processor; the processor is configured to read the computer program in the memory and perform the following operation:
determining a first SBFD symbol is valid or not.

Still yet another embodiment of the present disclosure further provides an information determination apparatus, applied to a terminal, comprising:
a first determining unit, configured to determine a first SBFD symbol is valid or not.

Still yet another embodiment of the present disclosure further provides an information determination apparatus, applied to a network device, comprising:
a second determining unit, configured to determine a first SBFD symbol is valid or not.

Still yet another embodiment of the present disclosure further provides a processor-readable storage medium, wherein the processor-readable storage medium stores a computer program therein, and the computer program is configured to cause the processor to perform the methods described above.

### Beneficial Effect(s)

In the above solutions, by determining the first SBFD symbol is valid or not, the state of the configured SBFD symbol(s) is clarified, thereby ensuring communication reliability.

### BRIEF DESCRIPTION OF THE DRAWINGS

To illustrate the technical solutions in the embodiments of the present disclosure or the prior art more clearly, the drawings required for describing the embodiments or the prior art are briefly introduced below.
FIG. 1 is a structural diagram of a network system suitable for an embodiment of the present disclosure;
FIG. 2 is a first schematic flowchart of an information determination method in an embodiment of the present disclosure;
FIG. 3 is a first schematic diagram of SBFD configurations and SSB configurations;
FIG. 4 is a second schematic diagram of SBFD configurations and SSB configurations;
FIG. 5 is a third schematic diagram of SBFD configurations and SSB configurations;
FIG. 6 is a fourth schematic diagram of SBFD configurations and SSB configurations;
FIG. 7 is a fifth schematic diagram of SBFD configurations and SSB configurations;
FIG. 8 is a sixth schematic diagram of SBFD configurations and SSB configurations;
FIG. 9 is a seventh schematic diagram of SBFD configurations and SSB configurations;
FIG. 10 is an eighth schematic diagram of SBFD configurations and SSB configurations;
FIG. 11 is a ninth schematic diagram of SBFD configurations and SSB configurations;
FIG. 12 is a second schematic flowchart of an information determination method in an embodiment of the present disclosure;
FIG. 13 is a first schematic unit diagram of an information determination apparatus in an embodiment of the present disclosure;
FIG. 14 is a structural diagram of a terminal in an embodiment of the present disclosure;
FIG. 15 is a second schematic unit diagram of an information determination apparatus in an embodiment of the present disclosure; and
FIG. 16 is a structural diagram of a network device in an embodiment of the present disclosure.

### DETAILED DESCRIPTION

The technical solutions in the embodiments of the present disclosure will be described clearly and completely below with reference to the accompanying drawings in the embodiments of the present disclosure. Obviously, the described embodiments are only a part of the embodiments of the present disclosure, rather than all of them. All other embodiments obtained by a person of ordinary skill in the art based on the embodiments of the present disclosure without creative efforts shall fall within the protection scope of the present disclosure.

Terms such as "first" and "second" in the description and claims of the present disclosure are used to distinguish similar objects and are not necessarily used to describe a specific order or sequence. It should be understood that data used in this way may be interchangeable under appropriate circumstances, such that the embodiments of the present disclosure described herein can be implemented in orders other than those illustrated or described herein, for example. Furthermore, the terms "include," "have," and any variations thereof are intended to cover non-exclusive inclusions. For example, a process, method, system, product, or device including a series of steps or units is not necessarily limited to those steps or units clearly listed, but may include other steps or units not clearly listed or inherent to such processes, methods, products, or devices.

The term "and/or" in the embodiments of the present disclosure describes an association relationship between associated objects, indicating that three relationships may exist. For example, A and/or B may represent: A exists alone, both A and B exist, and B exists alone. The character "/" generally indicates an "or" relationship between the associated objects before and after it. The term "multiple" in the embodiments of the present disclosure refers to two or more, and other quantifiers are similar.

In the embodiments of the present disclosure, words such as "exemplary" or "for example" are used to represent an example, instance, or illustration. Any embodiment or design described as "exemplary" or "for example" in the embodiments of the present disclosure should not be interpreted as being more preferred or advantageous than other embodiments or designs. Rather, the use of words such as "exemplary" or "for example" is intended to present relevant concepts in a specific manner.

Embodiments of the present disclosure are introduced below with reference to the accompanying drawings. The information determination methods, the information determination apparatuses, the terminals, and the network devices provided in the embodiments of the present disclosure can be applied to a wireless communication system. The wireless communication system may be a system employing fifth-generation (5G) mobile communication technology (hereinafter referred to as a 5G system). Those skilled in the art can understand that a 5G NR system is only an example and not a limitation.

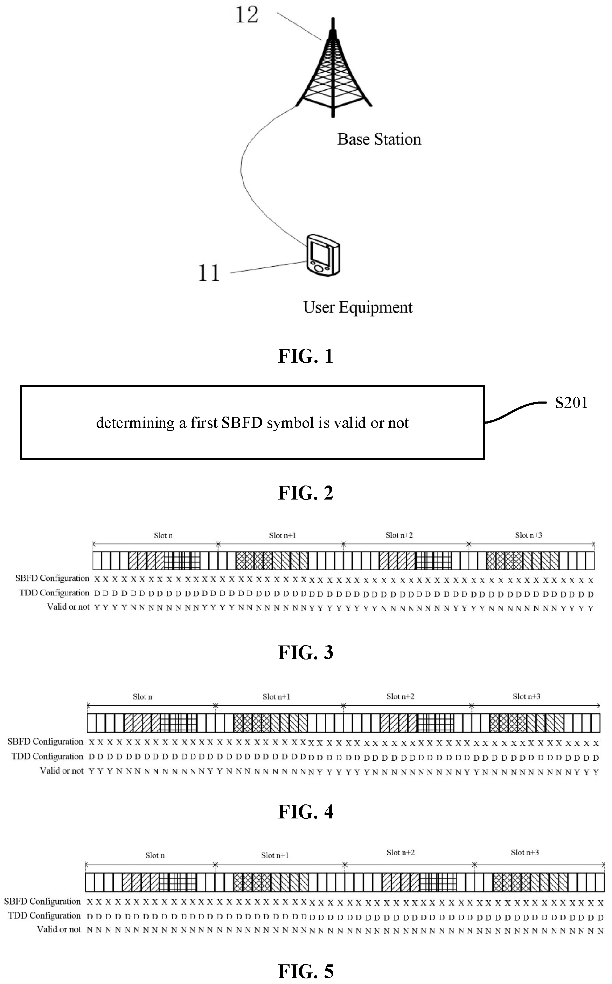

Reference is made to FIG. 1, which is a structural diagram of a network system to which an embodiment of the present disclosure is applicable. As shown in FIG. 1, the network system includes a user terminal 11 and a base station 12. The user terminal 11 may be a User Equipment (UE), such as terminal-side devices including a mobile phone, a tablet personal computer, a laptop computer, a personal digital assistant (PDA), a mobile internet device (MID), or a wearable device. It should be noted that the specific type of the user terminal 11 is not limited in the embodiments of the present disclosure. The base station 12 may be a base station of 5G and later versions (e.g., gNB, 5G NR NB), or a base station in other communication systems, or referred to as a NodeB. It should be noted that, in the embodiments of the present disclosure, a 5G base station is only taken as an example, but the specific type of the base station 12 is not limited.

Embodiments of the present disclosure provide information determination methods, information determination apparatuses, terminals, and network devices, so as to implement determination of the state of configured SBFD symbol(s).

The method and the apparatus are based on the same inventive concept. Since the principles for solving the problem by the method and the apparatus are similar, the implementations of the apparatus and the method may refer to each other, and redundant descriptions are omitted.

As shown in FIG. 2, an embodiment of the present disclosure provides an information determination method, which is performed by a terminal and includes:
Step S201: determining a first SBFD symbol is valid or not.

It should be noted that, in order to solve the problem of mismatch between a TDD period and a Synchronization Signal and PBCH block (SS/PBCH block, SSB for short) period, it is allowed to configure SBFD symbols on symbols where SSBs are located. The embodiments of the present disclosure clarify the state of the configured SBFD symbol(s) by determining whether the first SBFD symbol is valid, thereby ensuring communication reliability.

It should be noted that the first SBFD symbol mentioned in the embodiments of the present disclosure at least includes an SBFD symbol configured on a symbol where a Synchronization Signal and PBCH block (SSB) is located.

In some embodiments, in one implementation, when the first SBFD symbol is determined to be valid, the method further includes:
determining that one or more uplink sub-bands on the first SBFD symbol as capable of uplink transmission; or
determining that one or more uplink sub-bands on the first SBFD symbol as not capable of uplink transmission;
wherein the first SBFD symbol is an SBFD symbol configured on one or more symbols where one or more SSBs are located.

In some embodiments, in one implementation, when the first SBFD symbol is determined as not valid, the first SBFD symbol includes at least one of the following:
A11. the first SBFD symbol is an SBFD symbol configured on one or more symbols where one or more SSBs are located.
It should be noted that this case can be understood as only the SBFD symbol configured on the symbol where the SSB is located being the first SBFD symbol.

It should be noted that the symbol where the SSB is located mentioned herein is a symbol on which the network device transmits the SSB (i.e., a symbol on which the network device actually transmits the SSB), or the symbol where the SSB is located is a symbol used to transmit the SSB determined in accordance with an SSB pattern (which can be understood as a symbol that may transmit the SSB determined in accordance with the SSB pattern).

That is, the SBFD symbol configured on the symbol where the SSB is located is not valid, as shown in FIG. 3, for example. If a non-SSB symbol adjacent to the symbol where the SSB is located is also configured as an SBFD symbol, as shown in FIG. 3, a length of T time units needs to be reserved between the SBFD symbol and the SSB symbol, where the time unit may be a symbol or a sampling interval. By reserving T time units, the problem of switching between SBFD symbols and non-SBFD symbols and/or the conflict problem between uplink and downlink can be solved. The T time units may be reserved by the network device, i.e., the network device does not schedule uplink transmission or transmit downlink within the T time units. Alternatively, it is specified in the protocol that when the terminal determines the validity of an uplink transmission, the transmission occasion needs to be spaced apart from the SSB symbol by T time units in the time domain. If the transmission occasion is spaced apart from the symbol where the SSB is located by T time units in the time domain, the uplink transmission is valid; otherwise, the uplink transmission is not valid. The uplink transmission may be a Physical Random Access Channel (PRACH), a Physical Uplink Shared Channel (PUSCH), a Physical Uplink Control Channel (PUCCH), or the like; or, it is specified in the protocol that when an uplink transmission occasion overlaps with the T time units, the overlapping part needs to be dropped, and rate matching is performed on the non-overlapping part, wherein the uplink transmission may be a PUSCH.

Alternatively, the time is reserved by further specifying that K non-SSB symbols before and/or after the symbol where the SSB is located are not valid. That is, if a non-SSB symbol before and/or after the symbol where the SSB is located is also configured as an SBFD symbol, as shown in FIG. 4, K=1 symbols before and/or after the symbol where the SSB is located are not valid. In some embodiments, it may be specified that the K non-SSB symbols are not used for uplink or downlink transmission.

It should be noted that, in FIG. 3 and FIG. 4, slot n is the first slot in the half radio frame containing the SSB, wherein the hatched or checkered boxes in FIG. 3 and FIG. 4 represent the symbols where the SSBs are located.

As shown in FIG. 3 and FIG. 4, this situation may lead to frequent switching between SBFD and non-SBFD, which greatly increases the complexity of the network device and the terminal. To solve the problem of frequent switching between SBFD and non-SBFD for the network device and the terminal, the following A12 may be considered.

A12. the first SBFD symbol is the SBFD symbol configured on one or more slots where one or more SSBs are located.

It should be noted that this case can be understood as the SBFD symbol configured on the slot where the SSB is located being the first SBFD symbol, including the SBFD symbol configured on the symbol where the SSB is located and the SBFD symbol configured on the symbol where the non-SSB is located.

In some embodiments, the slot where the SSB is located mentioned herein is the slot in which the network device transmits the SSB (i.e., the slot in which the network device actually transmits the SSB), or the slot where the SSB is located is the slot used to transmit the SSB determined in accordance with an SSB pattern (which can be understood as the slot that may transmit the SSB determined in accordance with the SSB pattern).

That is, in this case, it is considered that the SBFD symbol configured on the slot where the SSB is located is not valid, wherein the slot where the SSB is located may be a candidate slot where the SSB is located determined in accordance with any one of SSB pattern Case A to Case G, or a slot determined in accordance with the candidate slot and the ssb-PositionsInBurst parameter in System Information Block Type 1 (SIB1) / ServingCellConfigCommon.

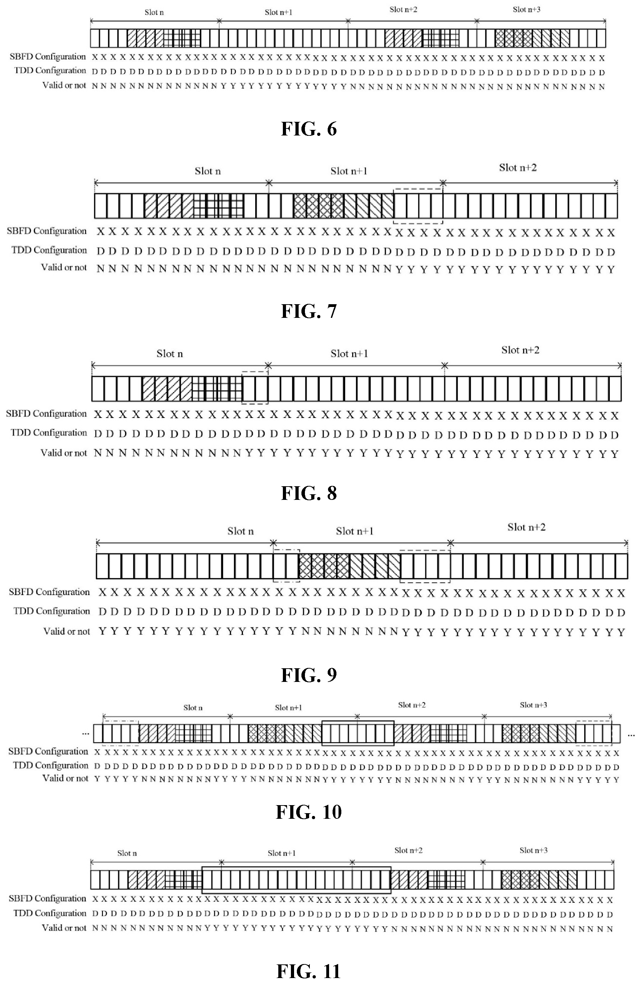

For example, the slot where the SSB is located is determined in accordance with SSB pattern Case B, the carrier frequency is in FR1 and is greater than 3GHz, and the SBFD configuration and SSB pattern are as shown in FIG. 5. At this time, regardless of what the SSB pattern actually transmitted by the network device is, if slot n to slot n+3 determined in accordance with SSB pattern Case B are all configured as SBFD symbols, the SBFD symbols configured on slot n to slot n+3 are not valid. For example, the slot where the SSB is located is determined in accordance with the candidate slot and the ssb-PositionsInBurst parameter in SIB1 / ServingCellConfigCommon, the SSB pattern is Case B, and the carrier frequency is in FR1 and is greater than 3GHz. If ssb-PositionsInBurst indicates {11001111}, the actually transmitted SSB is as shown in FIG. 6. The SSB slots determined in accordance with the ssb-PositionsInBurst parameter are slot n, slot n+2, and slot n+3 in FIG. 6. If slot n, slot n+2, and slot n+3 are configured as SBFD symbols, the SBFD symbols configured on slot n, slot n+2, and slot n+3 are not valid. Since it is determined in accordance with ssb-PositionsInBurst that slot n+1 actually has no SSB, if slot n+1 is configured as an SBFD symbol, it is valid at this time. It should be noted that in FIG. 5 and FIG. 6, slot n is the first slot in the half radio frame containing the SSB, wherein the hatched or checkered boxes in FIG. 5 and FIG. 6 represent the symbols where the SSBs are located.

A13. other SBFD symbol than a second SBFD symbol within half radio frame containing therein one or more SSBs, wherein the second SBFD symbol is the SBFD symbol configured as the SBFD symbol within the half radio frame containing therein the one or more SSBs and where one or more non-SSBs are located.

It should be noted that this case can be understood as all SBFD symbols within the half radio frame containing the SSB, other than the second SBFD symbol, being the first SBFD symbols.

In some embodiments, in one implementation, the second SBFD symbol includes at least one of the following:

A131. with respect to the half radio frame containing therein a symbol where the one or more SSBs are located, the SBFD symbol where all or part of non-SSBs are located before a first SSB symbol within a slot where a first SSB is located within the half radio frame and/or after a last SSB symbol within another slot where a last SSB is located within the half radio frame.

In some embodiments, in one implementation, when the second SBFD symbol comprises the SBFD symbol where all or part of non-SSBs are located before a first SSB symbol within a slot where a first SSB is located within the half radio frame and/or after a last SSB symbol within another slot where a last SSB is located within the half radio frame, the second SBFD symbol comprises at least one of the following:
A1311. the SBFD symbol where all or part of non-SSBs are located before the first SSB symbol within the slot where the first SSB is located within the half radio frame, when a previous slot before the slot where the first SSB is located within the half radio frame is an SBFD slot;
A1312. the SBFD symbol where all or part of non-SSBs are located before the first SSB symbol within the slot where the first SSB is located within the half radio frame, when a previous symbol before the slot where the first SSB is located within the half radio frame is an SBFD symbol;
A1313. the SBFD symbol where all or part of non-SSBs are located after the last SSB symbol within the slot where the last SSB is located within the half radio frame, when a subsequent slot after the slot where the last SSB is located within the half radio frame is an SBFD slot;
A1314. the SBFD symbol where all or part of non-SSBs are located after the last SSB symbol within the slot where the last SSB is located within the half radio frame, when a subsequent symbol after the slot where the last SSB is located within the half radio frame is an SBFD symbol.

A132. with respect to the half radio frame containing therein a symbol where the one or more SSBs are located, between the first SSB symbol and the last SSB symbol, when a number of the non-SSB symbols configured as consecutive SBFD symbols is greater than and/or equal to a second threshold value, all or part of SBFD symbols within the non-SSB symbols configured as consecutive SBFD symbols.

It should be noted that "greater than and/or equal to" herein mainly includes "greater than" (corresponding to the mathematical symbol ">") and "greater than or equal to" (corresponding to the mathematical symbol "≥").

For example, if the number of consecutive non-SSB symbols configured as SBFD symbols is greater than or equal to M, all or part of the M symbols may be valid, where M=4,8,16, etc.

It should be noted that the second threshold value may be specified by a protocol or configured by a network device.

For example, the slot where the SSB is located is determined based on the candidate slot and the *ssb-PositionsInBurst* parameter in SIB1/ *ServingCellConfigCommon*, wherein a pattern corresponding to the candidate slot is Case B, the carrier frequency is in FR1 and is less than or equal to 3GHz, and the *ssb-PositionsInBurst* parameter indicates {1111}. The second SBFD symbol is determined according to the aforementioned A131. In a half radio frame containing the SSB, assuming that a previous symbol before the slot where the first SSB is located is a non-SBFD symbol and a subsequent symbol after the slot where the last SSB is located is an SBFD symbol, as shown in FIG. 7, all non-SSB symbols after the last SSB symbol in the slot where the last SSB is located (such as the symbols indicated by the dashed box in FIG. 7) are valid. Slot n in this figure is the first slot within the half radio frame containing the SSB, and the hatched or checkered boxes in FIG. 7 represent symbols where SSBs are located.

For example, the slot where the SSB is located is determined based on the candidate slot and the *ssb-PositionsInBurst* parameter in SIB1/ *ServingCellConfigCommon*, wherein the pattern corresponding to the candidate slot is Case B, the carrier frequency is in FR1 and is less than or equal to 3GHz, and the *ssb-PositionsInBurst* parameter indicates {1100}. The second SBFD symbol is determined according to the aforementioned A131. In a half radio frame containing the SSB, assuming that a previous symbol before the slot where the first SSB is located is a non-SBFD symbol and a subsequent symbol after the slot where the last SSB is located is an SBFD symbol, as shown in FIG. 8, all non-SSB symbols after the last SSB symbol in the slot where the last SSB is located (such as the symbols indicated by the dashed box in FIG. 8) are valid. Slot n in this figure is the first slot within the half radio frame containing the SSB, and the hatched or checkered boxes in FIG. 7 represent symbols where SSBs are located.

For example, the slot where the SSB is located is determined based on the candidate slot and the *ssb-PositionsInBurst* parameter in SIB1/ *ServingCellConfigCommon*, wherein the pattern corresponding to the candidate slot is Case B, the carrier frequency is in FR1 and is less than or equal to 3GHz, and the *ssb-PositionsInBurst* parameter indicates {0011}. The second SBFD symbol is determined according to the aforementioned A131. In a half radio frame containing the SSB, a previous symbol before the slot where the first SSB is located is an SBFD symbol, and a subsequent symbol after the slot where the last SSB is located is an SBFD symbol, as shown in FIG. 9. In this case, all non-SSB symbols before the first SSB symbol in the slot where the first SSB is located (such as the symbols within the dot-dash box in FIG. 9), and all non-SSB symbols after the last SSB symbol in the slot where the last SSB is located (such as the symbols within the dashed box in FIG. 9) are valid. Slot n in this figure is the first slot within the half radio frame containing the SSB, and the hatched or checkered boxes in FIG. 9 represent symbols where SSBs are located.

For example, the slot where the SSB is located is determined based on the candidate slot and the *ssb-PositionsInBurst* parameter in SIB1/ *ServingCellConfigCommon*, wherein the pattern corresponding to the candidate slot is Case B, the carrier frequency is in FR1 and is greater than 3GHz, and the *ssb-PositionsInBurst* parameter indicates {11111111}. The second SBFD symbol is determined according to the aforementioned A131 and A132. According to A131, in a half radio frame containing the SSB, a previous symbol before the slot where the first SSB is located is an SBFD symbol, and a subsequent symbol after the slot where the last SSB is located is an SBFD symbol, as shown in FIG. 10. In this case, all non-SSB symbols before the first SSB symbol in the slot where the first SSB is located (such as the symbols within the dot-dash box in FIG. 10), and all non-SSB symbols after the last SSB symbol in the slot where the last SSB is located (such as the symbols within the dashed box in FIG. 10) are valid. According to A132, if for example M=8, the number of consecutive non-SSB symbols configured as SBFD symbols between slot n+1 and slot n+2 is equal to 8 (such as the symbols within the solid box in FIG. 10). Therefore, the SBFD configuration on these eight(8) non-SSB symbols is also valid. Slot n in this figure is the first slot within the half radio frame containing the SSB, and the hatched or checkered boxes in FIG. 10 represent symbols where SSBs are located.

For example, the slot where the SSB is located is determined based on the candidate slot and the *ssb-PositionsInBurst* parameter in SIB1/ *ServingCellConfigCommon*, the SSB pattern is Case B, the carrier frequency is in FR1 and is greater than 3GHz, and *ssb-PositionsInBurst* indicates {11001111}. The actually transmitted SSB is as shown in FIG. 11. The SSB slots determined based on the *ssb-PositionsInBurst* parameter are slot n, slot n+2, and slot n+3 in FIG. 11. If slot n, slot n+2, and slot n+3 are configured as SBFD symbols, the SBFD symbols configured on slot n, slot n+2, and slot n+3 are not valid. Since slot n+1 and the two(2) symbols preceding it as well as the four(4) symbols following it are all configured as SBFD symbols, the number of consecutive non-SSB symbols configured as SBFD symbols is equal to 20, which is greater than M (e.g., M=16). At this time, the SBFD configuration on these 20 non-SSB symbols is valid.

It should also be noted here that, with respect to the non-SSB symbols configured as SBFD symbols within the boxes in FIG. 7 to FIG. 11, it may also be considered that part of the non-SSB symbols within the boxes are valid, thereby reserving time between the symbols where the SSBs are located and the non-SSB symbols configured as SBFD symbols. This solves the switching issue between SBFD symbols and non-SBFD symbols and/or the conflict issue between uplink and downlink. For example, it may be specified by a protocol or indicated by the network device to reserve Q symbols at the front and/or back within the boxes, where Q is an integer.

A14. the first SBFD symbol is the SBFD symbol configured within a Time Domain Duplex (TDD) slot configuration period where one or more SSBs are located.

In some embodiments, the TDD slot configuration period may be any one of the following:
A141. a slot configuration period indicated by *pattern1*;
A142. a slot configuration period indicated by *pattern2*;
A143. a sum of the slot configuration period indicated by *pattern1* and the slot configuration period indicated by *pattern2*.

That is, if an SSB symbol is contained within the slot configuration period indicated by *pattern1* and/or *pattern2*, the SBFD symbols configured within the slot configuration period indicated by *pattern1* and/or *pattern2* are not valid, or all fallback to downlink symbols or flexible symbols. Alternatively, if an SSB symbol is contained within the slot configuration period indicated by *pattern1* and/or *pattern2*, SBFD symbols within a first period range are not valid, or all fallback to downlink symbols or flexible symbols, wherein the first period is the sum of the slot configuration period indicated by *pattern1* and the slot configuration period indicated by *pattern2*.

A15. the first SBFD symbol is the SBFD symbol configured within an SBFD configuration period where one or more SSBs are located.

In some embodiments, the SBFD configuration period is an SBFD sub-band time-domain configuration period, which is configured by the network device.

When the network device configures only one TDD-UL-DL pattern, the SBFD configuration period is the period of the TDD-UL-DL pattern. When the base station configures two TDD-UL-DL patterns, the SBFD configuration period is the sum of the periods of the two TDD-UL-DL patterns.

In some embodiments, the SSB mentioned in the embodiments of the present disclosure includes a Cell Defining (CD) SSB and/or a Non Cell Defining (NCD) SSB.

It should be noted here that, when the first SBFD symbol is determined to be not valid, the content of the first SBFD symbol corresponding to the CD-SSB and the NCD-SSB may be the same or different. For example, in the case of an NCD-SSB, A11 is adopted; in the case of a CD-SSB, A12 or A13 is adopted.

In some embodiments, the one or more symbols where one or more SSBs are located mentioned in the embodiments of the present disclosure refers to four consecutive symbols where the one or more SSBs are located.

In some embodiments, the symbols where the SSB is located mentioned in the embodiments of the present disclosure include one or more symbols where at least one of the following is located:
B11. Secondary Synchronization Signals (SSS);
B12. Primary Synchronization Signal (PSS);
B13. Physical Broadcast Channel (PBCH).

In some embodiments, in one implementation, the method further comprises:
determining the first SBFD symbol on the basis of subcarrier spacing (SCS) of the SSBs and subcarrier spacing of activated Bandwidth Parts (BWPs); wherein the activated BWPs are activated uplink BWPs and/or activated downlink BWPs.

It should be noted that because the symbols where the SSB is located are determined based on four consecutive symbols where the SSB is located, when the SCS of the SSB is the same as the SCS of the activated BWP, the first SBFD symbol and the SSB symbols are aligned in the time domain. When the SCS of the SSB is different from the SCS of the activated BWP, the first SBFD symbol needs to be determined based on the SCS of the SSB and the SCS of the activated BWP. For example, the first SBFD symbol may include 4*2^{SCS_BWP-SCS_SSB} consecutive symbols, where SCS_BWP represents the subcarrier spacing of the activated BWP, and SCS_SSB represents the subcarrier spacing of the SSB.

It should be noted that in some embodiments, in one implementation, determining whether the first SBFD symbol is valid may be performed without considering whether the activated uplink BWP and/or the activated downlink BWP contains the frequency domain position where the SSB is located. In this way, from the perspective of the network device, the validity of the first SBFD symbol is uniform, and there will be no situation where the validity status of the first SBFD symbol determined by different terminals is inconsistent (i.e., some terminals determine that the first SBFD symbol is valid, while other terminals determine that the first SBFD symbol is not valid).

In some embodiments, in another implementation, determining whether the first SBFD symbol is valid may also be applicable only to the case where the activated BWP contains the frequency domain position where the SSB is located. That is, the specific implementation of the determining a first SBFD symbol is valid or not includes:
determining the first SBFD symbol is valid or not, when activated BWPs comprise frequency domain positions wherein one or more SSBs are located, wherein the activated BWPs are activated uplink BWPs and/or activated downlink BWPs.

That is, determining whether the first SBFD symbol is valid is only applicable when the activated uplink BWP and/or activated downlink BWP contains the frequency domain position where the SSB is located. For an activated uplink BWP and/or activated downlink BWP that does not contain the frequency domain position where the SSB is located, the first SBFD symbol is valid. This would lead to inconsistent determinations of the validity of the first SBFD symbol by different terminals; i.e., the first SBFD symbol is valid for some terminals and not valid for other terminals.

It should be noted that through the specific solutions for determining whether the first SBFD symbol is valid described above, it is possible to implement support or non-support for uplink transmission on SSB symbols configured as SBFD symbols. As mentioned above, when the first SBFD symbol is valid, support or non-support for uplink transmission on SSB symbols configured as SBFD symbols can be implemented. On the other hand, when the first SBFD symbol is not valid, non-support for uplink transmission on SSB symbols configured as SBFD symbols can be implemented.

In some embodiments, in one implementation, the determining the first SBFD symbol is valid or not comprises at least one of the following:
C11. determining the first SBFD symbol is valid or not in accordance with protocol specification.

It should be noted that this case means that whether the first SBFD symbol is valid is specified by the protocol, and both the terminal and the network device can learn this according to the protocol specification.

That is, the network device and the terminal determine whether the first SBFD symbol is valid or not valid in accordance with protocol specification. In some embodiments, the above specification may be applicable to CD-SSBs and NCD-SSBs, or the validity of the first SBFD symbol may be separately specified for CD-SSBs and NCD-SSBs. For example, considering that the CD-SSBs of co-channel adjacent cells may be aligned in the time domain, specifying that the first SBFD symbol is not valid will not introduce severe cross-interference. However, for NCD-SSBs, considering that NCD-SSBs in adjacent cells may not be aligned in the time domain and/or frequency domain, if the first SBFD symbol is specified as not valid, severe cross-interference will be introduced. Therefore, for a CD-SSB, the first SBFD symbol is specified as not valid; whilst for an NCD-SSB, the first SBFD symbol is specified as valid. For another example, for UEs within a serving cell, the time-frequency domain positions of the CD-SSB are known, but some UEs may not know the positions of NCD-SSBs. If the SBFD configuration on NCD-SSB symbols is specified as not valid, the base station would need to notify the UE of the positions of said NCD-SSBs. To avoid the resulting signaling overhead, it may be considered to specify that the first SBFD symbol is not valid for a CD-SSB and valid for an NCD-SSB. For another example, considering that the CD-SSB carries the configuration information of CORESET#0 associated with SIB1, the terminal obtains system information according to the CORESET#0 associated with SIB1 to access the cell, while the NCD-SSB cannot implement the aforementioned functions of the CD-SSB. Meanwhile, considering the randomness of initial cell access via the CD-SSB and the fact that the base station cannot predict such behavior and thus cannot take measures to protect such behavior from uplink transmission interference, the first SBFD symbol is specified as not valid for a CD-SSB and valid for an NCD-SSB.

For example, the protocol specifies that the SBFD symbol configured on the symbol where the SSB is located is valid. Furthermore, it is specified that the uplink sub-band on said SBFD symbol can transmit uplink, or it is specified that the uplink sub-band on said SBFD symbol cannot transmit uplink.

For example, if the protocol does not specify that the SBFD symbol configured on the symbol where the SSB is located is not valid, it means the SBFD symbol configured on the symbol where the SSB is located is specified as valid.

For example, if the protocol does not specify that the SBFD symbol configured on the symbol where the SSB is located is not valid, and does not specify that the uplink sub-band on the symbol where the SSB is located cannot transmit uplink, it means the SBFD symbol configured on the symbol where the SSB is located is specified as valid and can transmit uplink.

For example, if the protocol does not specify that the SBFD symbol configured on the symbol where the SSB is located is not valid, but specifies that the uplink sub-band on the symbol where the SSB is located cannot transmit uplink, it means the SBFD symbol configured on the symbol where the SSB is located is valid but cannot transmit uplink.

For example, the protocol specifies that the SBFD symbol configured on the symbol where the SSB is located is not valid, and the protocol specifies whether A11, A12, or A13 is specifically used.

C12. determining the first SBFD symbol is valid or not in accordance with indication signaling transmitted by a network device, wherein the indication signaling is configured to indicate whether the first SBFD symbol is valid.

It should be noted that this case means that whether the first SBFD symbol is valid is determined by the network device and indicated to the terminal through indication signaling.

That is, the network device indicates to the terminal through signaling whether the first SBFD symbol in the SBFD configuration is valid. For example, the signaling indicates two states: valid and not valid. In some embodiments, the signaling may be applicable to both CD-SSBs and NCD-SSBs; i.e., CD-SSBs and NCD-SSBs share a single set of signaling. Alternatively, indications may be provided separately for CD-SSBs and NCD-SSBs. That is, the network device indicates whether the SBFD symbol configured on CD-SSB symbols is valid via first signaling, and indicates whether the SBFD symbol configured on NCD-SSB symbols is valid via second signaling. In some embodiments, the signaling may also indicate whether the SBFD symbol configured on an SSB corresponding to an SSB index is valid according to the SSB index.

It should be noted that the indication signaling may be carried in a cell common message (e.g., in a SIB) or transmitted via UE-specific RRC signaling.

C13. determining the first SBFD symbol is valid or not in accordance with a number of switching between SBFD symbols and non-SBFD symbols.

It should be noted that, in this case, whether the first SBFD symbol is valid is determined based on the number of switching between SBFD symbols and non-SBFD symbols, and the terminal and the network device adopt the same rules for determination to ensure consistent understanding between the terminal side and the network device side.

It should be noted that the switching between SBFD symbols and non-SBFD symbols comprises: switching from an SBFD symbol to a non-SBFD symbol, and/or switching from a non-SBFD symbol to an SBFD symbol.

In some embodiments, in one implementation, the specific implementation of the determining the first SBFD symbol is valid or not in accordance with the number of switching between SBFD symbols and non-SBFD symbols comprises at least one of the following:
C131. determining the first SBFD symbol is valid, when a first number of switching between SBFD symbols and non-SBFD symbols is greater than and/or equal to a first threshold value.

It should be noted that the first threshold value may be specified by a protocol or configured by a network device.

In this case, it can be considered that as long as the switching count between SBFD symbols and non-SBFD symbols within a time unit is greater than and/or equal to the first threshold value, the first SBFD symbol is considered valid.

In some embodiments, the time unit may be an SBFD configuration period, or a period related to the SBFD configuration.

It should be noted that "greater than and/or equal to" herein mainly comprises "greater than" (corresponding to the mathematical symbol ">") and "greater than or equal to" (corresponding to the mathematical symbol "≥").

C132. determining the first SBFD symbol is not valid, when the first number of switching between SBFD symbols and non-SBFD symbols is smaller than and/or equal to the first threshold value.

In this case, it can be considered that if the switching count between SBFD symbols and non-SBFD symbols within a time unit is smaller than and/or equal to the first threshold value, the first SBFD symbol is considered not valid.

In some embodiments, the time unit may be an SBFD configuration period, or a period related to the SBFD configuration.

It should be noted that "smaller than and/or equal to" herein mainly comprises "smaller than" (corresponding to the mathematical symbol "<") and "smaller than or equal to" (corresponding to the mathematical symbol "≤").

It should be noted here that if C131 specifies that the first number of switching is greater than the first threshold value, then C132 specifies that the first number of switching is smaller than or equal to the first threshold value. On the other hand, if C131 specifies that the first number of switching is greater than or equal to the first threshold value, then C132 specifies that the first number of switching is smaller than the first threshold value.

C133. determining a second number of switching between SBFD symbols and non-SBFD symbols, when the first number of switching between SBFD symbols and non-SBFD symbols is smaller than and/or equal to the first threshold value and the first SBFD symbol is determined as not valid; determining the first SBFD symbol is valid when the second number of switching is greater than and/or equal to the first threshold value, or determining the first SBFD symbol is not valid when the second number of switching is smaller than and/or equal to the first threshold value.

In this case, it can be considered that if the switching count between SBFD symbols and non-SBFD symbols within the time unit is smaller than and/or equal to the first threshold value, the first SBFD symbol is tentatively determined as not valid. Then, based on the assumption that the first SBFD symbol is not valid, the number of switching between SBFD symbols and non-SBFD symbols within the time unit is determined again. As long as the re-determined switching count is greater than and/or equal to the first threshold value, the first SBFD symbol is ultimately determined to be valid; otherwise, it is determined to be not valid.

In some embodiments, the time unit may be an SBFD configuration period, or a period related to the SBFD configuration.

It should be noted that this solution can prevent a situation where the number of switches between SBFD symbols and non-SBFD symbols within a time unit (e.g., an SBFD configuration period) exceeds the first threshold value because the first symbol is not valid.

For example, if within the SBFD configuration period, the number of switching from SBFD symbols to non-SBFD symbols and the number of switching from non-SBFD symbols to SBFD symbols is greater than or equal to N, the first SBFD symbol is valid. Otherwise, it is necessary to determine whether the switching count within the SBFD configuration period-determined after applying A11, A12, or A13 where the first SBFD symbol is not valid-is greater than N. If it is greater than N, the first SBFD symbol is valid. If it is smaller than or equal to N, then A11, A12, or A13 (where the first SBFD symbol is not valid) is adopted, wherein A13 may be a solution based on A131, based on A132, or based on A131 and A132. Here, N is a predefined value or a value configured by the network device, and N is an integer, such as N=2. In some embodiments, the network device and the terminal determine whether to determine the second SBFD symbol according to A131, or according to A131 and A132, based on the switching count N. Specifically, when the switching count within the SBFD configuration period determined after applying A131 is greater than N, the second SBFD symbol is determined neither according to A131 nor according to A131 and A132. When the switching count within the SBFD configuration period determined after applying A131 is smaller than or equal to N, and when the switching count within the SBFD configuration period determined after applying A131 and A132 is greater than N, the second SBFD symbol may be determined according to A131. When the switching count within the SBFD configuration period determined after applying A131 and A132 is smaller than or equal to N, the second SBFD symbol may be determined according to A131 and A132. For example, if N=2 and the number of switching from SBFD symbols to non-SBFD symbols and from non-SBFD symbols to SBFD symbols within the SBFD configuration period is equal to 0, the base station and the UE determine that the first SBFD symbol is not valid. The SBFD symbol determined according to A131 would introduce one switch from an SBFD symbol to a non-SBFD symbol and one switch from a non-SBFD symbol to an SBFD symbol. Therefore, in this case, the network device and the terminal can only determine the second SBFD symbol according to A131. For example, if N=4 and the number of switching from SBFD symbols to non-SBFD symbols and from non-SBFD symbols to SBFD symbols within the SBFD configuration period is equal to 0, the network device and the terminal determine that the first SBFD symbol is not valid. The SBFD symbol determined according to A131 would introduce one switch from an SBFD symbol to a non-SBFD symbol and one switch from a non-SBFD symbol to an SBFD symbol. In this case, if the switching count within the SBFD configuration period determined after applying A131 and A132 is smaller than or equal to 4, the network device and the terminal can determine the second SBFD symbol according to A131 and A132. If the switching count within the SBFD configuration period determined after applying A131 and A132 is greater than 4, and the terminal ultimately determines that there are multiple consecutive segments of non-SSB symbols configured as SBFD symbols according to A132, and applying A132 can introduce two switching counts, then one or more consecutive segments of non-SSB symbols configured as SBFD symbols are determined as the second SBFD symbols according to the chronological rule from earliest to latest and the N value.

It should be noted that "protocol specification" mentioned in the embodiments of the present disclosure may also be referred to as "protocol agreement".

It should be noted that the embodiments of the present disclosure design specific solutions for supporting/not supporting uplink transmission on symbols where SSBs are located configured as SBFD symbols. According to the embodiments of the present disclosure, a terminal can determine the symbol type on the first SBFD symbol.

The technical solutions provided by the embodiments of the present disclosure can be applied to various systems, especially 5G systems. For example, the applicable systems may be a Global System for Mobile communications (GSM) system, a Code Division Multiple Access (CDMA) system, a Wideband Code Division Multiple Access (WCDMA) General Packet Radio Service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), a Worldwide Interoperability for Microwave Access (WiMAX) system, a 5G New Radio (NR) system, and the like. These various systems all include terminals (which may also be referred to as terminal devices) and network devices. The systems may also include core network parts, such as an Evolved Packet System (EPS), a 5G System (5GS), and the like.

The terminal involved in the embodiments of the present disclosure, which may also be referred to as a terminal device, may refer to a device that provides voice and/or data connectivity to a user, a handheld device with wireless connection functions, or another processing device connected to a wireless modem, and the like. In different systems, names of the terminal devices may also be different. For example, in a 5G system, a terminal device may be referred to as User Equipment (UE). A wireless terminal device may communicate with one or more core networks (CN) via a Radio Access Network (RAN). The wireless terminal device may be a mobile terminal device, such as a mobile phone (or referred to as a "cellular" phone) and a computer with a mobile terminal device, and for example, may be a portable, pocket-sized, handheld, computer-integrated, or vehicle-mounted mobile device, which exchanges voice and/or data with the radio access network. For example, devices such as Personal Communication Service (PCS) phones, cordless phones, Session Initiation Protocol (SIP) phones, Wireless Local Loop (WLL) stations, and Personal Digital Assistants (PDA). A wireless terminal device may also be referred to as a system, a subscriber unit, a subscriber station, a mobile station, a mobile, a remote station, an access point, a remote terminal, an access terminal, a user terminal, a user agent, or a user device, which is not limited in the embodiments of the present disclosure.

The network device involved in the embodiments of the present disclosure may be a base station, and the base station may include a plurality of cells providing services for a terminal. Depending on the specific application scenario, a base station may also be referred to as an access point, or may be a device in an access network that communicates with a wireless terminal device through one or more sectors on an air interface, or other names. A network device may be used to perform mutual conversion between received over-the-air frames and Internet Protocol (IP) packets, serving as a router between the wireless terminal device and the rest of the access network, where the rest of the access network may include an IP communication network. The network device may also coordinate attribute management for the air interface. For example, the network device involved in the embodiments of the present disclosure may be a network device (Base Transceiver Station, BTS) in Global System for Mobile communications (GSM) or Code Division Multiple Access (CDMA), or a network device (NodeB) in Wideband Code Division Multiple Access (WCDMA), or an evolved network device (evolved Node B, eNB or e-NodeB) in a Long Term Evolution (LTE) system, or a 5G base station (gNB) in a 5G network architecture (Next Generation System), or a Home evolved Node B (HeNB), a relay node, a femto base station (femto), a pico base station (pico), and the like, which is not limited in the embodiments of the present disclosure. In some network architectures, a network device may include a Centralized Unit (CU) node and a Distributed Unit (DU) node, and the CU and DU may also be arranged separately in terms of geography.

MIMO transmission may be performed between a network device and a terminal device using one or more antennas, respectively. The MIMO transmission may be Single-User MIMO (SU-MIMO) or Multi-User MIMO (MU-MIMO). Depending on the configuration and quantity of antenna combinations, the MIMO transmission may be Two-Dimensional MIMO (2D-MIMO), Three-Dimensional MIMO (3D-MIMO), Full-Dimensional MIMO (FD-MIMO), or Massive MIMO, and may also be diversity transmission, precoding transmission, beamforming transmission, or the like.

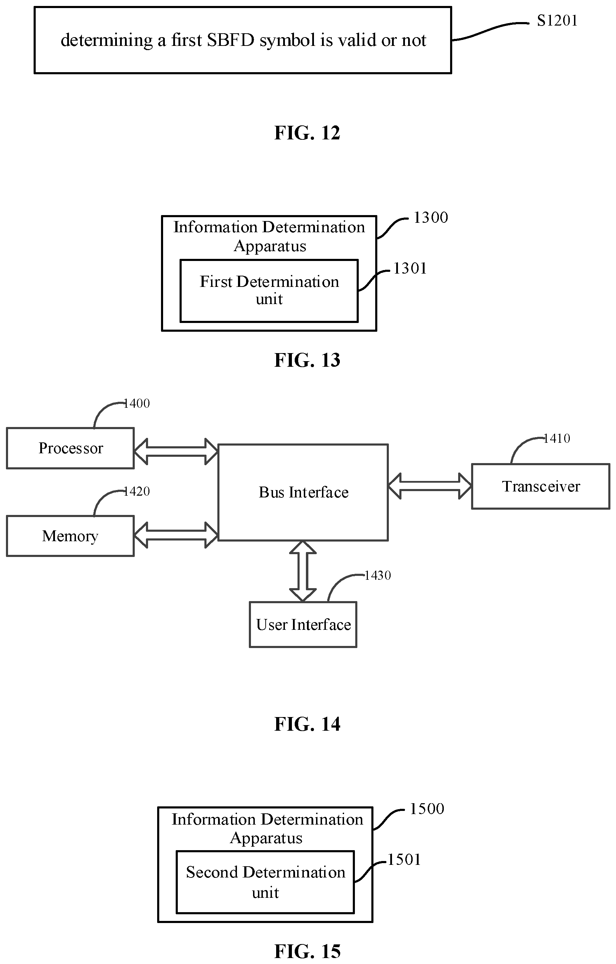

As shown in FIG. 12, an embodiment of the present disclosure provides an information determination method, which is performed by a network device and includes:
Step S1201: determining a first SBFD symbol is valid or not.

In some embodiments, the determining the first SBFD symbol is valid or not comprises at least one of the following:
determining the first SBFD symbol is valid or not in accordance with protocol specification;
determining the first SBFD symbol is valid or not in accordance with a number of switching between SBFD symbols and non-SBFD symbols.

In some embodiments, the determining the first SBFD symbol is valid or not in accordance with the number of switching between SBFD symbols and non-SBFD symbols comprises at least one of the following:
determining the first SBFD symbol is valid, when a first number of switching between SBFD symbols and non-SBFD symbols is greater than and/or equal to a first threshold value;
determining the first SBFD symbol is not valid, when the first number of switching between SBFD symbols and non-SBFD symbols is smaller than and/or equal to the first threshold value;
determining a second number of switching between SBFD symbols and non-SBFD symbols, when the first number of switching between SBFD symbols and non-SBFD symbols is smaller than and/or equal to the first threshold value and the first SBFD symbol is determined as not valid; determining the first SBFD symbol is valid when the second number of switching is greater than and/or equal to the first threshold value, or determining the first SBFD symbol is not valid when the second number of switching is smaller than and/or equal to the first threshold value.

In some embodiments, the method further comprises:
transmitting indication signaling to a terminal, wherein the indication signaling is configured to indicate that the first SBFD symbol is valid or not.

In some embodiments, when the first SBFD symbol is determined as valid, the method further comprises:
determining one or more uplink sub-bands on the first SBFD symbol as capable of uplink transmission; or
determining one or more uplink sub-bands on the first SBFD symbol as not capable of uplink transmission,
wherein the first SBFD symbol is an SBFD symbol configured on one or more symbols where one or more Synchronization Signal and PBCH Blocks (SSBs) are located.

In some embodiments, when the first SBFD symbol is determined as not valid, the first SBFD symbol comprises at least one of the following:
the SBFD symbol configured on one or more symbols where one or more SSBs are located;
the SBFD symbol configured on one or more slots where one or more SSBs are located;
the SBFD symbol configured within a Time Domain Duplex (TDD) slot configuration period where one or more SSBs are located;
the SBFD symbol configured within an SBFD configuration period where one or more SSBs are located;
other SBFD symbol than a second SBFD symbol within half radio frame containing therein one or more SSBs, wherein the second SBFD symbol is the SBFD symbol configured as the SBFD symbol within the half radio frame containing therein the one or more SSBs and where one or more non-SSBs are located.

In some embodiments, the second SBFD symbol comprises at least one of the following:
with respect to the half radio frame containing therein a symbol where the one or more SSBs are located, the SBFD symbol where all or part of non-SSBs are located before a first SSB symbol within a slot where a first SSB is located within the half radio frame and/or after a last SSB symbol within another slot where a last SSB is located within the half radio frame;
with respect to the half radio frame containing therein a symbol where the one or more SSBs are located, between the first SSB symbol and the last SSB symbol, when a number of the non-SSB symbols configured as consecutive SBFD symbols is greater than and/or equal to a second threshold value, all or part of SBFD symbols within the non-SSB symbols configured as consecutive SBFD symbols.

In some embodiments, when the second SBFD symbol comprises the SBFD symbol where all or part of non-SSBs are located before a first SSB symbol within a slot where a first SSB is located within the half radio frame and/or after a last SSB symbol within another slot where a last SSB is located within the half radio frame, the second SBFD symbol comprises at least one of the following:
the SBFD symbol where all or part of non-SSBs are located before the first SSB symbol within the slot where the first SSB is located within the half radio frame, when a previous slot before the slot where the first SSB is located within the half radio frame is an SBFD slot;
the SBFD symbol where all or part of non-SSBs are located before the first SSB symbol within the slot where the first SSB is located within the half radio frame, when a previous symbol before the slot where the first SSB is located within the half radio frame is an SBFD symbol;
the SBFD symbol where all or part of non-SSBs are located after the last SSB symbol within the slot where the last SSB is located within the half radio frame, when a subsequent slot after the slot where the last SSB is located within the half radio frame is an SBFD slot;
the SBFD symbol where all or part of non-SSBs are located after the last SSB symbol within the slot where the last SSB is located within the half radio frame, when a subsequent symbol after the slot where the last SSB is located within the half radio frame is an SBFD symbol.

In some embodiments, the one or more symbols where one or more SSBs are located are one or more symbols transmitted by the network device, or, the one or more symbols where one or more SSBs are located are one or more symbols used to transmit the one or more SSBs in accordance with an SSB pattern; or
the one or more slots where one or more SSBs are located are one or more slots transmitted by the network device, or, the one or more slots where one or more SSBs are located are one or more slots used to transmit the one or more SSBs in accordance with the SSB pattern.

In some embodiments, the one or more SSBs comprise CD SSBs and/or NCD SSBs.

In some embodiments, the one or more symbols where one or more SSBs are located are four consecutive symbols where the one or more SSBs are located.

In some embodiments, the one or more symbols where one or more SSBs are located comprise at least one of the following:
Secondary Synchronization Signals (SSSs);
Primary Synchronization Signal (PSS);
Physical Broadcast Channel (PBCH).

In some embodiments, the method further comprises:
determining the first SBFD symbol on the basis of subcarrier spacing of SSBs and subcarrier spacing of activated BWPs,
wherein the activated BWPs are activated uplink BWPs and/or activated downlink BWPs.

In some embodiments, the determining a first SBFD symbol is valid or not comprises:
determining the first SBFD symbol is valid or not, when activated BWPs comprise frequency domain positions wherein one or more SSBs are located,
wherein the activated BWPs are activated uplink BWPs and/or activated downlink BWPs.

It should be noted that all implementations in the above embodiments are applicable to the embodiment of the information determination method applied to the network device side, and the same technical effects can be achieved, which will not be repeated here.

As shown in FIG. 13, an embodiment of the present disclosure provides an information determination apparatus 1300, which is applied to a terminal and includes:
a first determining unit 1301, which is configured to determine a first SBFD symbol is valid or not.

In some embodiments, the first determining unit 1301 is configured to implement at least one of the following:
determining the first SBFD symbol is valid or not in accordance with protocol specification;
determining the first SBFD symbol is valid or not in accordance with indication signaling transmitted by a network device;
determining the first SBFD symbol is valid or not in accordance with a number of switching between SBFD symbols and non-SBFD symbols.

In some embodiments, the specific implementation of the determining the first SBFD symbol is valid or not in accordance with the number of switching between SBFD symbols and non-SBFD symbols comprises at least one of the following:
determining the first SBFD symbol is valid, when a first number of switching between SBFD symbols and non-SBFD symbols is greater than and/or equal to a first threshold value;
determining the first SBFD symbol is not valid, when the first number of switching between SBFD symbols and non-SBFD symbols is smaller than and/or equal to the first threshold value;
determining a second number of switching between SBFD symbols and non-SBFD symbols, when the first number of switching between SBFD symbols and non-SBFD symbols is smaller than and/or equal to the first threshold value and the first SBFD symbol is determined as not valid; determining the first SBFD symbol is valid when the second number of switching is greater than and/or equal to the first threshold value, or determining the first SBFD symbol is not valid when the second number of switching is smaller than and/or equal to the first threshold value.

In some embodiments, when the first SBFD symbol is determined as valid, the method further comprises:
a third determining unit, configured to determine one or more uplink sub-bands on the first SBFD symbol as capable of uplink transmission; or
determine one or more uplink sub-bands on the first SBFD symbol as not capable of uplink transmission,
wherein the first SBFD symbol is an SBFD symbol configured on one or more symbols where one or more SSBs are located.

In some embodiments, when the first SBFD symbol is determined as not valid, the first SBFD symbol comprises at least one of the following:
the SBFD symbol configured on one or more symbols where one or more SSBs are located;
the SBFD symbol configured on one or more slots where one or more SSBs are located;
the SBFD symbol configured within a TDD slot configuration period where one or more SSBs are located;
the SBFD symbol configured within an SBFD configuration period where one or more SSBs are located;
other SBFD symbol than a second SBFD symbol within half radio frame containing therein one or more SSBs, wherein the second SBFD symbol is the SBFD symbol configured as the SBFD symbol within the half radio frame containing therein the one or more SSBs and where one or more non-SSBs are located.

In some embodiments, the second SBFD symbol comprises at least one of the following:
with respect to the half radio frame containing therein a symbol where the one or more SSBs are located, the SBFD symbol where all or part of non-SSBs are located before a first SSB symbol within a slot where a first SSB is located within the half radio frame and/or after a last SSB symbol within another slot where a last SSB is located within the half radio frame;
with respect to the half radio frame containing therein a symbol where the one or more SSBs are located, between the first SSB symbol and the last SSB symbol, when a number of the non-SSB symbols configured as consecutive SBFD symbols is greater than and/or equal to a second threshold value, all or part of SBFD symbols within the non-SSB symbols configured as consecutive SBFD symbols.

In some embodiments, when the second SBFD symbol comprises the SBFD symbol where all or part of non-SSBs are located before a first SSB symbol within a slot where a first SSB is located within the half radio frame and/or after a last SSB symbol within another slot where a last SSB is located within the half radio frame, the second SBFD symbol comprises at least one of the following:
the SBFD symbol where all or part of non-SSBs are located before the first SSB symbol within the slot where the first SSB is located within the half radio frame, when a previous slot before the slot where the first SSB is located within the half radio frame is an SBFD slot;
the SBFD symbol where all or part of non-SSBs are located before the first SSB symbol within the slot where the first SSB is located within the half radio frame, when a previous symbol before the slot where the first SSB is located within the half radio frame is an SBFD symbol;
the SBFD symbol where all or part of non-SSBs are located after the last SSB symbol within the slot where the last SSB is located within the half radio frame, when a subsequent slot after the slot where the last SSB is located within the half radio frame is an SBFD slot;
the SBFD symbol where all or part of non-SSBs are located after the last SSB symbol within the slot where the last SSB is located within the half radio frame, when a subsequent symbol after the slot where the last SSB is located within the half radio frame is an SBFD symbol.

In some embodiments, the one or more symbols where one or more SSBs are located are one or more symbols transmitted by the network device, or, the one or more symbols where one or more SSBs are located are one or more symbols used to transmit the one or more SSBs in accordance with an SSB pattern; or
the one or more slots where one or more SSBs are located are one or more slots transmitted by the network device, or, the one or more slots where one or more SSBs are located are one or more slots used to transmit the one or more SSBs in accordance with the SSB pattern.

In some embodiments, the one or more SSBs comprise CD SSBs and/or NCD SSBs.

In some embodiments, the one or more symbols where one or more SSBs are located are four consecutive symbols where the one or more SSBs are located.

In some embodiments, the one or more symbols where one or more SSBs are located comprise at least one of the following:
Secondary Synchronization Signals (SSSs);
Primary Synchronization Signal (PSS);
Physical Broadcast Channel (PBCH).

In some embodiments, the apparatus further comprises:
a fourth determining unit, configured to determine the first SBFD symbol on the basis of subcarrier spacing of SSBs and subcarrier spacing of activated BWPs,
wherein the activated BWPs are activated uplink BWPs and/or activated downlink BWPs.

In some embodiments, the first determining unit 1301 is configured to:
determine the first SBFD symbol is valid or not, when activated BWPs comprise frequency domain positions wherein one or more SSBs are located,
wherein the activated BWPs are activated uplink BWPs and/or activated downlink BWPs.

It should be noted that the apparatus embodiment is an apparatus that corresponds to the above method embodiment one by one. All implementations in the above method embodiments are applicable to the apparatus embodiment, and the same technical effects can be achieved.

It should be noted that the division of units in the embodiments of the present disclosure is schematic and is merely a logical function division, and there may be other division manners in actual implementation. In addition, each functional unit in each embodiment of the present disclosure may be integrated into one processing unit, or each unit may exist physically independently, or two or more units may be integrated into one unit. The above integrated units may be implemented in the form of hardware or in the form of software functional units.

If the integrated unit is implemented in the form of a software functional unit and sold or used as an independent product, it may be stored in a processor-readable storage medium. Based on such an understanding, the technical solutions of the present disclosure essentially, or the part contributing to the prior art, or all or part of the technical solutions may be embodied in the form of a software product. The computer software product is stored in a storage medium, including several instructions to enable a computer device (which may be a personal computer, a server, or a network device, etc.) or a processor to perform all or part of the steps of the methods described in each embodiment of the present disclosure. The aforementioned storage media include: U-disk, mobile hard disk, Read-Only Memory (ROM), Random Access Memory (RAM), magnetic disk or optical disk and other media that can store program codes.

As shown in FIG. 14, an embodiment of the present disclosure further provides a terminal, comprising a processor 1400, a transceiver 1410, a memory 1420, and a program stored on the memory 1420 and executable on the processor 1400. The transceiver 1410 is connected to the processor 1400 and the memory 1420 through a bus interface. The processor 1400 is configured to read the program in the memory to perform the following process:
determining a first SBFD symbol is valid or not,
the transceiver 1410 is configured to receive and transmit data under the control of the processor 1400.

In FIG. 14, the bus architecture may include any number of interconnected buses and bridges, and specifically, various circuits of one or more processors represented by the processor 1400 and the memory represented by the memory 1420 are linked together. The bus architecture may also link various other circuits such as peripheral devices, voltage regulators, and power management circuits, which are well known in the art and therefore will not be further described herein. The bus interface provides an interface. The transceiver 1410 may be a plurality of elements, including a transmitter and a receiver, providing units for communicating with various other apparatuses over a transmission medium, which includes wireless channels, wired channels, fiber optic cables, and other transmission media. For different user equipments, the user interface 1430 may also be an interface capable of externally or internally connecting required devices, including but not limited to keypads, displays, speakers, microphones, joysticks, and the like.

The processor 1400 is responsible for managing the bus architecture and general processing, and the memory 1420 may store data used by the processor 1400 when performing operations.

In some embodiments, the processor 1400 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The processor is configured to perform any of the methods provided in the embodiments of the present disclosure according to obtained executable instructions by calling the computer program stored in the memory. The processor and the memory may also be arranged separately in terms of geography.

In some embodiments, the processor is configured to read the computer program in the memory and perform at least one of the following operations:
determining the first SBFD symbol is valid or not in accordance with protocol specification;
determining the first SBFD symbol is valid or not in accordance with indication signaling transmitted by a network device;
determining the first SBFD symbol is valid or not in accordance with a number of switching between SBFD symbols and non-SBFD symbols.

In some embodiments, the processor is configured to read the computer program in the memory and perform at least one of the following operations:
determining the first SBFD symbol is valid, when a first number of switching between SBFD symbols and non-SBFD symbols is greater than and/or equal to a first threshold value;
determining the first SBFD symbol is not valid, when the first number of switching between SBFD symbols and non-SBFD symbols is smaller than and/or equal to the first threshold value;
determining a second number of switching between SBFD symbols and non-SBFD symbols, when the first number of switching between SBFD symbols and non-SBFD symbols is smaller than and/or equal to the first threshold value and the first SBFD symbol is determined as not valid; determining the first SBFD symbol is valid when the second number of switching is greater than and/or equal to the first threshold value, or determining the first SBFD symbol is not valid when the second number of switching is smaller than and/or equal to the first threshold value.

In some embodiments, when the first SBFD symbol is determined as valid, the processor is configured to read the computer program in the memory to further perform the following operations:
determining one or more uplink sub-bands on the first SBFD symbol as capable of uplink transmission; or
determining one or more uplink sub-bands on the first SBFD symbol as not capable of uplink transmission,
wherein the first SBFD symbol is an SBFD symbol configured on one or more symbols where one or more Synchronization Signal and PBCH Blocks (SSBs) are located.

In some embodiments, when the first SBFD symbol is determined as not valid, the first SBFD symbol comprises at least one of the following:
the SBFD symbol configured on one or more symbols where one or more SSBs are located;
the SBFD symbol configured on one or more slots where one or more SSBs are located;
the SBFD symbol configured within a Time Domain Duplex (TDD) slot configuration period where one or more SSBs are located;
the SBFD symbol configured within an SBFD configuration period where one or more SSBs are located;
other SBFD symbol than a second SBFD symbol within half radio frame containing therein one or more SSBs, wherein the second SBFD symbol is the SBFD symbol configured as the SBFD symbol within the half radio frame containing therein the one or more SSBs and where one or more non-SSBs are located.

In some embodiments, the second SBFD symbol comprises at least one of the following:
with respect to the half radio frame containing therein a symbol where the one or more SSBs are located, the SBFD symbol where all or part of non-SSBs are located before a first SSB symbol within a slot where a first SSB is located within the half radio frame and/or after a last SSB symbol within another slot where a last SSB is located within the half radio frame;
with respect to the half radio frame containing therein a symbol where the one or more SSBs are located, between the first SSB symbol and the last SSB symbol, when a number of the non-SSB symbols configured as consecutive SBFD symbols is greater than and/or equal to a second threshold value, all or part of SBFD symbols within the non-SSB symbols configured as consecutive SBFD symbols.

In some embodiments, when the second SBFD symbol comprises the SBFD symbol where all or part of non-SSBs are located before a first SSB symbol within a slot where a first SSB is located within the half radio frame and/or after a last SSB symbol within another slot where a last SSB is located within the half radio frame, the second SBFD symbol comprises at least one of the following:
the SBFD symbol where all or part of non-SSBs are located before the first SSB symbol within the slot where the first SSB is located within the half radio frame, when a previous slot before the slot where the first SSB is located within the half radio frame is an SBFD slot;
the SBFD symbol where all or part of non-SSBs are located before the first SSB symbol within the slot where the first SSB is located within the half radio frame, when a previous symbol before the slot where the first SSB is located within the half radio frame is an SBFD symbol;
the SBFD symbol where all or part of non-SSBs are located after the last SSB symbol within the slot where the last SSB is located within the half radio frame, when a subsequent slot after the slot where the last SSB is located within the half radio frame is an SBFD slot;
the SBFD symbol where all or part of non-SSBs are located after the last SSB symbol within the slot where the last SSB is located within the half radio frame, when a subsequent symbol after the slot where the last SSB is located within the half radio frame is an SBFD symbol.

In some embodiments, the one or more symbols where one or more SSBs are located are one or more symbols transmitted by the network device, or, the one or more symbols where one or more SSBs are located are one or more symbols used to transmit the one or more SSBs in accordance with an SSB pattern; or
the one or more slots where one or more SSBs are located are one or more slots transmitted by the network device, or, the one or more slots where one or more SSBs are located are one or more slots used to transmit the one or more SSBs in accordance with the SSB pattern.

In some embodiments, the one or more SSBs comprise CD SSBs and/or NCD SSBs.

In some embodiments, the one or more symbols where one or more SSBs are located are four consecutive symbols where the one or more SSBs are located.

In some embodiments, the one or more symbols where one or more SSBs are located comprise at least one of the following:
Secondary Synchronization Signals (SSSs);
Primary Synchronization Signal (PSS);
Physical Broadcast Channel (PBCH).

In some embodiments, the processor is configured to read the computer program in the memory to further perform the following operation:
determining the first SBFD symbol on the basis of subcarrier spacing of SSBs and subcarrier spacing of activated BWPs,
wherein the activated BWPs are activated uplink BWPs and/or activated downlink BWPs.

In some embodiments, the processor is configured to read the computer program in the memory to further perform the following operation:
determining the first SBFD symbol is valid or not, when activated BWPs comprise frequency domain positions wherein one or more SSBs are located,
wherein the activated BWPs are activated uplink BWPs and/or activated downlink BWPs.

It should be noted that the terminal provided in the embodiments of the present disclosure can implement all method steps implemented by the above method embodiments, and can achieve the same technical effects. The same parts and beneficial effects as the method embodiments will not be specifically described in detail in this embodiment.

The embodiments of the present disclosure further provide a computer-readable storage medium storing a computer program. When the computer program is executed by a processor, the steps of the information determination method applied to the terminal are implemented. The processor-readable storage medium may be any available medium or data storage device that can be accessed by the processor, including but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, NAND FLASH, Solid State Disk or Solid State Drive (SSD)).

As shown in FIG. 15, an embodiment of the present disclosure provides an information determination apparatus 1500, which is applied to a network device and includes:
a second determining unit 1501, configured to determine a first SBFD symbol is valid or not.

In some embodiments, the second determining unit 1501 is configured to implement at least one of the following:
determining the first SBFD symbol is valid or not in accordance with protocol specification;
determining the first SBFD symbol is valid or not in accordance with a number of switching between SBFD symbols and non-SBFD symbols.

In some embodiments, the specific implementation of the determining the first SBFD symbol is valid or not in accordance with the number of switching between SBFD symbols and non-SBFD symbols comprises at least one of the following:
determining the first SBFD symbol is valid, when a first number of switching between SBFD symbols and non-SBFD symbols is greater than and/or equal to a first threshold value;
determining the first SBFD symbol is not valid, when the first number of switching between SBFD symbols and non-SBFD symbols is smaller than and/or equal to the first threshold value;
determining a second number of switching between SBFD symbols and non-SBFD symbols, when the first number of switching between SBFD symbols and non-SBFD symbols is smaller than and/or equal to the first threshold value and the first SBFD symbol is determined as not valid; determining the first SBFD symbol is valid when the second number of switching is greater than and/or equal to the first threshold value, or determining the first SBFD symbol is not valid when the second number of switching is smaller than and/or equal to the first threshold value.

In some embodiments, the apparatus further comprises:
a transmitting unit, configured to transmit indication signaling to a terminal, wherein the indication signaling is configured to indicate that the first SBFD symbol is valid or not.

In some embodiments, when the first SBFD symbol is determined as valid, the apparatus further comprises:
a fifth determining unit, configured to determine one or more uplink sub-bands on the first SBFD symbol as capable of uplink transmission; or
determine one or more uplink sub-bands on the first SBFD symbol as not capable of uplink transmission,
wherein the first SBFD symbol is an SBFD symbol configured on one or more symbols where one or more Synchronization Signal and PBCH Blocks (SSBs) are located.

In some embodiments, when the first SBFD symbol is determined as not valid, the first SBFD symbol comprises at least one of the following:
the SBFD symbol configured on one or more symbols where one or more SSBs are located;
the SBFD symbol configured on one or more slots where one or more SSBs are located;
the SBFD symbol configured within a Time Domain Duplex (TDD) slot configuration period where one or more SSBs are located;
the SBFD symbol configured within an SBFD configuration period where one or more SSBs are located;
other SBFD symbol than a second SBFD symbol within half radio frame containing therein one or more SSBs, wherein the second SBFD symbol is the SBFD symbol configured as the SBFD symbol within the half radio frame containing therein the one or more SSBs and where one or more non-SSBs are located.

In some embodiments, the second SBFD symbol comprises at least one of the following:
with respect to the half radio frame containing therein a symbol where the one or more SSBs are located, the SBFD symbol where all or part of non-SSBs are located before a first SSB symbol within a slot where a first SSB is located within the half radio frame and/or after a last SSB symbol within another slot where a last SSB is located within the half radio frame;
with respect to the half radio frame containing therein a symbol where the one or more SSBs are located, between the first SSB symbol and the last SSB symbol, when a number of the non-SSB symbols configured as consecutive SBFD symbols is greater than and/or equal to a second threshold value, all or part of SBFD symbols within the non-SSB symbols configured as consecutive SBFD symbols.

In some embodiments, when the second SBFD symbol comprises the SBFD symbol where all or part of non-SSBs are located before a first SSB symbol within a slot where a first SSB is located within the half radio frame and/or after a last SSB symbol within another slot where a last SSB is located within the half radio frame, the second SBFD symbol comprises at least one of the following:
the SBFD symbol where all or part of non-SSBs are located before the first SSB symbol within the slot where the first SSB is located within the half radio frame, when a previous slot before the slot where the first SSB is located within the half radio frame is an SBFD slot;
the SBFD symbol where all or part of non-SSBs are located before the first SSB symbol within the slot where the first SSB is located within the half radio frame, when a previous symbol before the slot where the first SSB is located within the half radio frame is an SBFD symbol;
the SBFD symbol where all or part of non-SSBs are located after the last SSB symbol within the slot where the last SSB is located within the half radio frame, when a subsequent slot after the slot where the last SSB is located within the half radio frame is an SBFD slot;
the SBFD symbol where all or part of non-SSBs are located after the last SSB symbol within the slot where the last SSB is located within the half radio frame, when a subsequent symbol after the slot where the last SSB is located within the half radio frame is an SBFD symbol.

In some embodiments, the one or more symbols where one or more SSBs are located are one or more symbols transmitted by the network device, or, the one or more symbols where one or more SSBs are located are one or more symbols used to transmit the one or more SSBs in accordance with an SSB pattern; or,
the one or more slots where one or more SSBs are located are one or more slots transmitted by the network device, or, the one or more slots where one or more SSBs are located are one or more slots used to transmit the one or more SSBs in accordance with the SSB pattern.

In some embodiments, the one or more SSBs comprise CD SSBs and/or NCD SSBs.

In some embodiments, the one or more symbols where one or more SSBs are located are four consecutive symbols where the one or more SSBs are located.

In some embodiments, the one or more symbols where one or more SSBs are located comprise at least one of the following:
Secondary Synchronization Signals (SSSs);
Primary Synchronization Signal (PSS);
Physical Broadcast Channel (PBCH).

In some embodiments, the apparatus further comprises:
a sixth determining unit, configured to determine the first SBFD symbol on the basis of subcarrier spacing of SSBs and subcarrier spacing of activated BWPs,
wherein the activated BWPs are activated uplink BWPs and/or activated downlink BWPs.

In some embodiments, the second determining unit 1501 is configured to:
determining the first SBFD symbol is valid or not, when activated BWPs comprise frequency domain positions wherein one or more SSBs are located,
wherein the activated BWPs are activated uplink BWPs and/or activated downlink BWPs.

It should be noted that the apparatus embodiment is an apparatus that corresponds to the above method embodiment one by one. All implementations in the above method embodiments are applicable to the apparatus embodiment, and the same technical effects can be achieved.

It should be noted that the division of units in the embodiments of the present disclosure is schematic and is merely a logical function division, and there may be other division manners in actual implementation. In addition, each functional unit in each embodiment of the present disclosure may be integrated into one processing unit, or each unit may exist physically independently, or two or more units may be integrated into one unit. The above integrated units may be implemented in the form of hardware or in the form of software functional units.

If the integrated unit is implemented in the form of a software functional unit and sold or used as an independent product, it may be stored in a processor-readable storage medium. Based on such an understanding, the technical solutions of the present disclosure essentially, or the part contributing to the prior art, or all or part of the technical solutions may be embodied in the form of a software product. The computer software product is stored in a storage medium, including several instructions to enable a computer device (which may be a personal computer, a server, or a network device, etc.) or a processor to perform all or part of the steps of the methods described in each embodiment of the present disclosure. The aforementioned storage media include: U-disk, mobile hard disk, Read-Only Memory (ROM), Random Access Memory (RAM), magnetic disk or optical disk and other media that can store program codes.

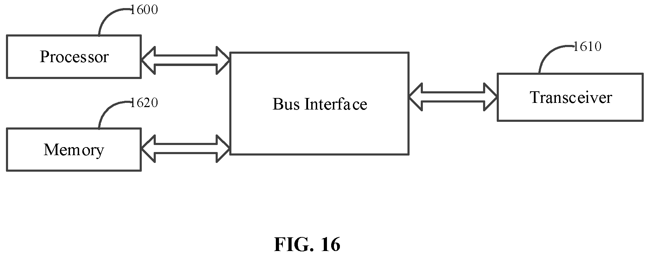

As shown in FIG. 16, an embodiment of the present disclosure further provides a network device, comprising a processor 1600, a transceiver 1610, a memory 1620, and a program stored on the memory 1620 and executable on the processor 1600. The transceiver 1610 is connected to the processor 1600 and the memory 1620 through a bus interface. The processor 1600 is configured to read the program in the memory to perform the following process:
determining a first Sub-Band Full Duplex (SBFD) symbol is valid or not,
the transceiver 1610 is configured to receive and transmit data under the control of the processor 1600.

In FIG. 16, the bus architecture may include any number of interconnected buses and bridges, and specifically, various circuits of one or more processors represented by the processor 1600 and the memory represented by the memory 1620 are linked together. The bus architecture may also link various other circuits such as peripheral devices, voltage regulators, and power management circuits, which are well known in the art and therefore will not be further described herein. The bus interface provides an interface. The transceiver 1610 may be a plurality of elements, including a transmitter and a receiver, providing units for communicating with various other apparatuses over a transmission medium, which includes wireless channels, wired channels, fiber optic cables, and other transmission media.

The processor 1600 is responsible for managing the bus architecture and general processing, and the memory 1620 may store data used by the processor 1600 when performing operations.

In some embodiments, the processor 1600 may be a CPU, an ASIC, an FPGA, or a CPLD. The processor may also adopt a multi-core architecture.

The processor is configured to perform any of the methods provided in the embodiments of the present disclosure according to obtained executable instructions by calling the computer program stored in the memory. The processor and the memory may also be arranged separately in terms of geography.

In some embodiments, the processor is configured to read the computer program in the memory and perform at least one of the following operations:
determining the first SBFD symbol is valid or not in accordance with protocol specification;
determining the first SBFD symbol is valid or not in accordance with a number of switching between SBFD symbols and non-SBFD symbols.

In some embodiments, the processor is configured to read the computer program in the memory and perform at least one of the following operations:
determining the first SBFD symbol is valid, when a first number of switching between SBFD symbols and non-SBFD symbols is greater than and/or equal to a first threshold value;
determining the first SBFD symbol is not valid, when the first number of switching between SBFD symbols and non-SBFD symbols is smaller than and/or equal to the first threshold value;
determining a second number of switching between SBFD symbols and non-SBFD symbols, when the first number of switching between SBFD symbols and non-SBFD symbols is smaller than and/or equal to the first threshold value and the first SBFD symbol is determined as not valid; determining the first SBFD symbol is valid when the second number of switching is greater than and/or equal to the first threshold value, or determining the first SBFD symbol is not valid when the second number of switching is smaller than and/or equal to the first threshold value.

In some embodiments, the processor is configured to read the computer program in the memory and further perform the following operation:
transmitting indication signaling to a terminal, wherein the indication signaling is configured to indicate that the first SBFD symbol is valid or not.

In some embodiments, when the first SBFD symbol is determined as valid, the processor is configured to read the computer program in the memory and further perform the following operations:
determining one or more uplink sub-bands on the first SBFD symbol as capable of uplink transmission; or
determining one or more uplink sub-bands on the first SBFD symbol as not capable of uplink transmission,
wherein the first SBFD symbol is an SBFD symbol configured on one or more symbols where one or more Synchronization Signal and PBCH Blocks (SSBs) are located.

In some embodiments, when the first SBFD symbol is determined as not valid, the first SBFD symbol comprises at least one of the following:
the SBFD symbol configured on one or more symbols where one or more SSBs are located;
the SBFD symbol configured on one or more slots where one or more SSBs are located;
the SBFD symbol configured within a Time Domain Duplex (TDD) slot configuration period where one or more SSBs are located;
the SBFD symbol configured within an SBFD configuration period where one or more SSBs are located;
other SBFD symbol than a second SBFD symbol within half radio frame containing therein one or more SSBs, wherein the second SBFD symbol is the SBFD symbol configured as the SBFD symbol within the half radio frame containing therein the one or more SSBs and where one or more non-SSBs are located.

In some embodiments, the second SBFD symbol satisfies at least one of the following:
with respect to the half radio frame containing therein a symbol where the one or more SSBs are located, the SBFD symbol where all or part of non-SSBs are located before a first SSB symbol within a slot where a first SSB is located within the half radio frame and/or after a last SSB symbol within another slot where a last SSB is located within the half radio frame;
with respect to the half radio frame containing therein a symbol where the one or more SSBs are located, between the first SSB symbol and the last SSB symbol, when a number of the non-SSB symbols configured as consecutive SBFD symbols is greater than and/or equal to a second threshold value, all or part of SBFD symbols within the non-SSB symbols configured as consecutive SBFD symbols.

In some embodiments, when the second SBFD symbol comprises the SBFD symbol where all or part of non-SSBs are located before a first SSB symbol within a slot where a first SSB is located within the half radio frame and/or after a last SSB symbol within another slot where a last SSB is located within the half radio frame, the second SBFD symbol comprises at least one of the following:
the SBFD symbol where all or part of non-SSBs are located before the first SSB symbol within the slot where the first SSB is located within the half radio frame, when a previous slot before the slot where the first SSB is located within the half radio frame is an SBFD slot;
the SBFD symbol where all or part of non-SSBs are located before the first SSB symbol within the slot where the first SSB is located within the half radio frame, when a previous symbol before the slot where the first SSB is located within the half radio frame is an SBFD symbol;
the SBFD symbol where all or part of non-SSBs are located after the last SSB symbol within the slot where the last SSB is located within the half radio frame, when a subsequent slot after the slot where the last SSB is located within the half radio frame is an SBFD slot;
the SBFD symbol where all or part of non-SSBs are located after the last SSB symbol within the slot where the last SSB is located within the half radio frame, when a subsequent symbol after the slot where the last SSB is located within the half radio frame is an SBFD symbol.

In some embodiments, the one or more symbols where one or more SSBs are located are one or more symbols transmitted by the network device, or, the one or more symbols where one or more SSBs are located are one or more symbols used to transmit the one or more SSBs in accordance with an SSB pattern; or, the one or more slots where one or more SSBs are located are one or more slots transmitted by the network device, or, the one or more slots where one or more SSBs are located are one or more slots used to transmit the one or more SSBs in accordance with the SSB pattern.

In some embodiments, the one or more SSBs comprise CD SSBs and/or NCD SSBs.

In some embodiments, the one or more symbols where one or more SSBs are located are four consecutive symbols where the one or more SSBs are located.

In some embodiments, the one or more symbols where one or more SSBs are located comprise at least one of the following:
Secondary Synchronization Signals (SSSs);
Primary Synchronization Signal (PSS);
Physical Broadcast Channel (PBCH).

In some embodiments, the processor is configured to read the computer program in the memory and further perform the following operation:
determining the first SBFD symbol on the basis of subcarrier spacing of SSBs and subcarrier spacing of activated BWPs,
wherein the activated BWPs are activated uplink BWPs and/or activated downlink BWPs.

In some embodiments, the processor is configured to read the computer program in the memory and perform the following operation:
determining the first SBFD symbol is valid or not, when activated BWPs comprise frequency domain positions wherein one or more SSBs are located,
wherein the activated BWPs are activated uplink BWPs and/or activated downlink BWPs.

It should be noted that the network device provided in the embodiments of the present disclosure can implement all method steps implemented by the above method embodiments, and can achieve the same technical effects. The same parts and beneficial effects as the method embodiments will not be specifically described in detail in this embodiment.

The embodiments of the present disclosure further provide a computer-readable storage medium storing a computer program. When the computer program is executed by a processor, the steps of the information determination method applied to the network device are implemented. The processor-readable storage medium may be any available medium or data storage device that can be accessed by the processor, including but not limited to magnetic storage (such as floppy disk, hard disk, magnetic tape, MO, etc.), optical storage (such as CD, DVD, BD, HVD, etc.), and semiconductor memory (such as ROM, EPROM, EEPROM, NAND FLASH, SSD).

Those skilled in the art should understand that the embodiments of the present disclosure can be provided as a method, a system, or a computer program product. Therefore, the present disclosure may take the form of an entirely hardware embodiment, an entirely software embodiment, or an embodiment combining software and hardware aspects. Moreover, the present disclosure may take the form of a computer program product implemented on one or more computer-usable storage media (including but not limited to disk storage and optical storage, etc.) containing computer-usable program code therein.

The present disclosure is described with reference to flowcharts and/or block diagrams of methods, equipment (systems), and computer program products according to embodiments of the present disclosure. It should be understood that each flow and/or block in the flowcharts and/or block diagrams, and combinations of flows and/or blocks in the flowcharts and/or block diagrams, can be implemented by computer-executable instructions. These computer-executable instructions can be provided to the processor of a general-purpose computer, a special-purpose computer, an embedded processor, or other programmable data processing equipment to produce a machine, such that instructions executed through the processor of the computer or other programmable data processing equipment produce an apparatus for implementing the functions specified in one or more flows of the flowchart and/or one or more blocks of the block diagram.

These computer-executable instructions may also be stored in a processor-readable memory that can guide a computer or other programmable data processing equipment to work in a specific manner, such that the instructions stored in the processor-readable memory produce an article of manufacture including an instruction device, the instruction device implementing the functions specified in one or more flows of the flowchart and/or one or more blocks of the block diagram.

These computer-executable instructions may also be loaded onto a computer or other programmable data processing equipment, such that a series of operating steps are performed on the computer or other programmable equipment to produce computer-implemented processing, thereby providing steps for implementing the functions specified in one or more flows of the flowchart and/or one or more blocks of the block diagram through the instructions executed on the computer or other programmable equipment.

In addition, it should be pointed out that in the apparatus and method of the present disclosure, obviously, various components or various steps can be decomposed and/or recombined. These decompositions and/or recombinations should be regarded as equivalent solutions of the present disclosure. Moreover, the steps of performing the above series of processing can naturally be performed in chronological order according to the order of explanation, but do not necessarily need to be performed in chronological order; certain steps can be performed in parallel or independently of each other. For those of ordinary skill in the art, it can be understood that all or any steps or components of the method and apparatus of the present disclosure can be implemented in any computing device (including processors, storage media, etc.) or network of computing devices in the form of hardware, firmware, software, or a combination thereof, which can be implemented by those of ordinary skill in the art using their basic programming skills after reading the description of the present disclosure.

It should be noted that it should be understood that the division of the above modules is only a logical function division, and they can be all or partially integrated into one physical entity or physically separated in actual implementation. Moreover, these modules can all be implemented in the form of software called by processing elements; they can also all be implemented in the form of hardware; some modules can also be implemented in the form of software called by processing elements, and some modules are implemented in the form of hardware. For example, a certain module can be a separately established processing element, or it can be integrated into a certain chip of the above-mentioned apparatus for implementation. In addition, it can also be stored in the memory of the above-mentioned apparatus in the form of program code, and called and executed by a certain processing element of the above-mentioned apparatus to implement the functions of the above-mentioned determination module. The implementation of other modules is similar. In addition, all or part of these modules can be integrated together or implemented independently. The processing element described here can be an integrated circuit with signal processing capabilities. In the implementation process, each step of the above method or each of the above modules can be completed by hardware integrated logic circuits in the processor element or instructions in the form of software.

For example, each module, unit, subunit, or sub-module may be one or more integrated circuits configured to implement the above methods, for example: one or more Application Specific Integrated Circuits (ASICs), or one or more microprocessors (Digital Signal Processors, DSPs), or one or more Field Programmable Gate Arrays (FPGAs), etc. For another example, when a certain module above is implemented in the form of a processing element scheduling program code, the processing element may be a general-purpose processor, such as a Central Processing Unit (CPU) or other processors that can call program code. For another example, these modules can be integrated together and implemented in the form of a System-on-a-Chip (SOC).

Terms such as "first" and "second" in the description and claims of the present disclosure are used to distinguish similar objects and are not necessarily used to describe a specific order or sequence. It should be understood that data used in this way may be interchangeable under appropriate circumstances, such that the embodiments of the present disclosure described herein can be implemented in orders other than those illustrated or described herein, for example. Furthermore, the terms "include," "have," and any variations thereof are intended to cover non-exclusive inclusions. For example, a process, method, system, product, or device including a series of steps or units is not necessarily limited to those steps or units clearly listed, but may include other steps or units not clearly listed or inherent to such processes, methods, products, or devices. In addition, the use of "and/or" in the description and claims represents at least one of the connected objects. For example, A and/or B and/or C represents 7 situations: only A, only B, only C, both A and B exist, both B and C exist, both A and C exist, and all three of A, B, and C exist. Similarly, the use of "at least one of A and B" in this description and claims should be understood as "only A, only B, or both A and B exist."

Obviously, those skilled in the art can make various changes and modifications to the present disclosure without departing from the spirit and scope of the present disclosure. Thus, if these modifications and variations of the present disclosure fall within the scope of the claims of the present disclosure and their equivalent technologies, the present disclosure also intends to include these changes and variations.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. An information determination method, which is performed by a terminal, the method comprising:
determining a first Sub-Band Full Duplex (SBFD) symbol is valid or not.

2. The method according to claim 1, wherein the determining the first SBFD symbol is valid or not comprises at least one of the following:
determining the first SBFD symbol is valid or not in accordance with protocol specification;
determining the first SBFD symbol is valid or not in accordance with indication signaling transmitted by a network device;
determining the first SBFD symbol is valid or not in accordance with a number of switching between SBFD symbols and non-SBFD symbols.

3. The method according to claim 2, wherein the determining the first SBFD symbol is valid or not in accordance with the number of switching between SBFD symbols and non-SBFD symbols comprises at least one of the following:
determining the first SBFD symbol is valid, when a first number of switching between SBFD symbols and non-SBFD symbols is greater than and/or equal to a first threshold value;
determining the first SBFD symbol is not valid, when the first number of switching between SBFD symbols and non-SBFD symbols is smaller than and/or equal to the first threshold value;
determining a second number of switching between SBFD symbols and non-SBFD symbols, when the first number of switching between SBFD symbols and non-SBFD symbols is smaller than and/or equal to the first threshold value and the first SBFD symbol is determined as not valid; determining the first SBFD symbol is valid when the second number of switching is greater than and/or equal to the first threshold value, or determining the first SBFD symbol is not valid when the second number of switching is smaller than and/or equal to the first threshold value.

4. The method according to claim 1, wherein when the first SBFD symbol is determined as valid, the method further comprises:
determining one or more uplink sub-bands on the first SBFD symbol as capable of uplink transmission; or
determining one or more uplink sub-bands on the first SBFD symbol as not capable of uplink transmission,
wherein the first SBFD symbol is an SBFD symbol configured on one or more symbols where one or more Synchronization Signal and PBCH Blocks (SSBs) are located.

5. The method according to claim 1, wherein when the first SBFD symbol is determined as not valid, the first SBFD symbol comprises at least one of the following:
the SBFD symbol configured on one or more symbols where one or more SSBs are located;
the SBFD symbol configured on one or more slots where one or more SSBs are located;
the SBFD symbol configured within a Time Domain Duplex (TDD) slot configuration period where one or more SSBs are located;
the SBFD symbol configured within an SBFD configuration period where one or more SSBs are located;
other SBFD symbol than a second SBFD symbol within half radio frame containing therein one or more SSBs, wherein the second SBFD symbol is the SBFD symbol configured as the SBFD symbol within the half radio frame containing therein the one or more SSBs and where one or more non-SSBs are located.

6. The method according to claim 5, wherein the second SBFD symbol comprises at least one of the following:
with respect to the half radio frame containing therein a symbol where the one or more SSBs are located, the SBFD symbol where all or part of non-SSBs are located before a first SSB symbol within a slot where a first SSB is located within the half radio frame and/or after a last SSB symbol within another slot where a last SSB is located within the half radio frame;
with respect to the half radio frame containing therein a symbol where the one or more SSBs are located, between the first SSB symbol and the last SSB symbol, when a number of the non-SSB symbols configured as consecutive SBFD symbols is greater than and/or equal to a second threshold value, all or part of SBFD symbols within the non-SSB symbols configured as consecutive SBFD symbols.

7. The method according to claim 6, wherein when the second SBFD symbol comprises the SBFD symbol where all or part of non-SSBs are located before a first SSB symbol within a slot where a first SSB is located within the half radio frame and/or after a last SSB symbol within another slot where a last SSB is located within the half radio frame, the second SBFD symbol comprises at least one of the following:
the SBFD symbol where all or part of non-SSBs are located before the first SSB symbol within the slot where the first SSB is located within the half radio frame, when a previous slot before the slot where the first SSB is located within the half radio frame is an SBFD slot;
the SBFD symbol where all or part of non-SSBs are located before the first SSB symbol within the slot where the first SSB is located within the half radio frame, when a previous symbol before the slot where the first SSB is located within the half radio frame is an SBFD symbol;
the SBFD symbol where all or part of non-SSBs are located after the last SSB symbol within the slot where the last SSB is located within the half radio frame, when a subsequent slot after the slot where the last SSB is located within the half radio frame is an SBFD slot;
the SBFD symbol where all or part of non-SSBs are located after the last SSB symbol within the slot where the last SSB is located within the half radio frame, when a subsequent symbol after the slot where the last SSB is located within the half radio frame is an SBFD symbol.

8. The method according to claim 4 or 5, wherein the one or more symbols where one or more SSBs are located are one or more symbols transmitted by the network device, or, the one or more symbols where one or more SSBs are located are one or more symbols used to transmit the one or more SSBs in accordance with an SSB pattern; or
wherein the one or more slots where one or more SSBs are located are one or more slots transmitted by the network device, or, the one or more slots where one or more SSBs are located are one or more slots used to transmit the one or more SSBs in accordance with the SSB pattern.

9. The method according to claim 4 or 5, wherein the one or more SSBs comprise Cell Defining (CD) SSBs and/or Non Cell Defining (NCD) SSBs.

10. The method according to claim 4 or 5, wherein the one or more symbols where one or more SSBs are located are four consecutive symbols where the one or more SSBs are located.

11. The method according to claim 4 or 5, wherein the one or more symbols where one or more SSBs are located comprise at least one of the following:
Secondary Synchronization Signals (SSSs);
Primary Synchronization Signal (PSS);
Physical Broadcast Channel (PBCH).

12. The method according to claim 1, further comprising:
determining the first SBFD symbol on the basis of subcarrier spacing of SSBs and subcarrier spacing of activated Bandwidth Parts (BWPs),
wherein the activated BWPs are activated uplink BWPs and/or activated downlink BWPs.

13. The method according to claim 1, wherein the determining a first SBFD symbol is valid or not comprises:
determining the first SBFD symbol is valid or not, when activated BWPs comprise frequency domain positions wherein one or more SSBs are located,
wherein the activated BWPs are activated uplink BWPs and/or activated downlink BWPs.

14. An information determination method, which is performed by a network device, the method comprising:
determining a first Sub-Band Full Duplex (SBFD) symbol is valid or not.

15. The method according to claim 14, wherein the determining the first SBFD symbol is valid or not comprises at least one of the following:
determining the first SBFD symbol is valid or not in accordance with protocol specification;
determining the first SBFD symbol is valid or not in accordance with a number of switching between SBFD symbols and non-SBFD symbols.

16. The method according to claim 15, wherein the determining the first SBFD symbol is valid or not in accordance with the number of switching between SBFD symbols and non-SBFD symbols comprises at least one of the following:
determining the first SBFD symbol is valid, when a first number of switching between SBFD symbols and non-SBFD symbols is greater than and/or equal to a first threshold value;
determining the first SBFD symbol is not valid, when the first number of switching between SBFD symbols and non-SBFD symbols is smaller than and/or equal to the first threshold value;
determining a second number of switching between SBFD symbols and non-SBFD symbols, when the first number of switching between SBFD symbols and non-SBFD symbols is smaller than and/or equal to the first threshold value and the first SBFD symbol is determined as not valid; determining the first SBFD symbol is valid when the second number of switching is greater than and/or equal to the first threshold value, or determining the first SBFD symbol is not valid when the second number of switching is smaller than and/or equal to the first threshold value.

17. The method according to claim 14, further comprising:
transmitting indication signaling to a terminal, wherein the indication signaling is configured to indicate that the first SBFD symbol is valid or not.

18. The method according to claim 14, wherein when the first SBFD symbol is determined as valid, the method further comprises:
determining one or more uplink sub-bands on the first SBFD symbol as capable of uplink transmission; or
determining one or more uplink sub-bands on the first SBFD symbol as not capable of uplink transmission,
wherein the first SBFD symbol is an SBFD symbol configured on one or more symbols where one or more Synchronization Signal and PBCH Blocks (SSBs) are located.

19. The method according to claim 14, wherein when the first SBFD symbol is determined as not valid, the first SBFD symbol comprises at least one of the following:
the SBFD symbol configured on one or more symbols where one or more SSBs are located;
the SBFD symbol configured on one or more slots where one or more SSBs are located;
the SBFD symbol configured within a Time Domain Duplex (TDD) slot configuration period where one or more SSBs are located;
the SBFD symbol configured within an SBFD configuration period where one or more SSBs are located;
other SBFD symbol than a second SBFD symbol within half radio frame containing therein one or more SSBs, wherein the second SBFD symbol is the SBFD symbol configured as the SBFD symbol within the half radio frame containing therein the one or more SSBs and where one or more non-SSBs are located.

20. The method according to claim 19, wherein the second SBFD symbol comprises at least one of the following:
with respect to the half radio frame containing therein a symbol where the one or more SSBs are located, the SBFD symbol where all or part of non-SSBs are located before a first SSB symbol within a slot where a first SSB is located within the half radio frame and/or after a last SSB symbol within another slot where a last SSB is located within the half radio frame;
with respect to the half radio frame containing therein a symbol where the one or more SSBs are located, between the first SSB symbol and the last SSB symbol, when a number of the non-SSB symbols configured as consecutive SBFD symbols is greater than and/or equal to a second threshold value, all or part of SBFD symbols within the non-SSB symbols configured as consecutive SBFD symbols.

21. The method according to claim 20, wherein when the second SBFD symbol comprises the SBFD symbol where all or part of non-SSBs are located before a first SSB symbol within a slot where a first SSB is located within the half radio frame and/or after a last SSB symbol within another slot where a last SSB is located within the half radio frame, the second SBFD symbol comprises at least one of the following:
the SBFD symbol where all or part of non-SSBs are located before the first SSB symbol within the slot where the first SSB is located within the half radio frame, when a previous slot before the slot where the first SSB is located within the half radio frame is an SBFD slot;
the SBFD symbol where all or part of non-SSBs are located before the first SSB symbol within the slot where the first SSB is located within the half radio frame, when a previous symbol before the slot where the first SSB is located within the half radio frame is an SBFD symbol;
the SBFD symbol where all or part of non-SSBs are located after the last SSB symbol within the slot where the last SSB is located within the half radio frame, when a subsequent slot after the slot where the last SSB is located within the half radio frame is an SBFD slot;
the SBFD symbol where all or part of non-SSBs are located after the last SSB symbol within the slot where the last SSB is located within the half radio frame, when a subsequent symbol after the slot where the last SSB is located within the half radio frame is an SBFD symbol.

22. The method according to claim 18 or 19, wherein the one or more symbols where one or more SSBs are located are one or more symbols transmitted by the network device, or, the one or more symbols where one or more SSBs are located are one or more symbols used to transmit the one or more SSBs in accordance with an SSB pattern; or
wherein the one or more slots where one or more SSBs are located are one or more slots transmitted by the network device, or, the one or more slots where one or more SSBs are located are one or more slots used to transmit the one or more SSBs in accordance with the SSB pattern.

23. The method according to claim 18 or 19, wherein the one or more SSBs comprise Cell Defining (CD) SSBs and/or Non Cell Defining (NCD) SSBs.

24. The method according to claim 18 or 19, wherein the one or more symbols where one or more SSBs are located are four consecutive symbols where the one or more SSBs are located.

25. The method according to claim 18 or 19, wherein the one or more symbols where one or more SSBs are located comprise at least one of the following:
Secondary Synchronization Signals (SSSs);
Primary Synchronization Signal (PSS);
Physical Broadcast Channel (PBCH).

26. The method according to claim 14, further comprising:
determining the first SBFD symbol on the basis of subcarrier spacing of SSBs and subcarrier spacing of activated Bandwidth Parts (BWPs),
wherein the activated BWPs are activated uplink BWPs and/or activated downlink BWPs.

27. The method according to claim 14, wherein the determining a first SBFD symbol is valid or not comprises:
determining the first SBFD symbol is valid or not, when activated BWPs comprise frequency domain positions wherein one or more SSBs are located,
wherein the activated BWPs are activated uplink BWPs and/or activated downlink BWPs.

28. A terminal, comprising a memory, a transceiver and a processor, wherein the memory is configured to store therein a computer program, and the transceiver is configured to transmit and receive data under the control of the processor, wherein the processor is configured to read the computer program in the memory so as to: determine a first Sub-Band Full Duplex (SBFD) symbol is valid or not.

29. A network device, comprising a memory, a transceiver and a processor, wherein the memory is configured to store therein a computer program, and the transceiver is configured to transmit and receive data under the control of the processor, wherein the processor is configured to read the computer program in the memory, so as to: determine a first Sub-Band Full Duplex (SBFD) symbol is valid or not.

30. An information determination apparatus, which is arranged at a terminal, the apparatus comprising:
a first determining unit, which is configured to determine a first Sub-Band Full Duplex (SBFD) symbol is valid or not.

31. An information determination method, apparatus, which is arranged at a network device, the apparatus comprising:
a second determining unit, which is configured to determine a first Sub-Band Full Duplex (SBFD) symbol is valid or not.

32. A processor-readable storage medium storing therein a computer program, wherein the computer program is executed by a processor so as to implement the method according to any one of claims 1 to 27.
